Europäisches Patentamt

European Patent Office

Office européen des brevets

(11) Publication number: 0 341 881
A2

## (12) EUROPEAN PATENT APPLICATION

(21) Application number: 89304387.7

(51) Int. Cl.⁴: H04M 1/72

(22) Date of filing: 02.05.89

(30) Priority: 12.05.88 GB 8811222

(43) Date of publication of application:
15.11.89 Bulletin 89/46

(84) Designated Contracting States:
DE ES FR IT

(71) Applicant: PLESSEY OVERSEAS LIMITED
Vicarage Lane
Ilford Essex IGI 4AQ(GB)

(72) Inventor: Baker, John Mark
5 The Topiary Binfields
Lychpt Basingstoke, RG24 0YX(GB)

(74) Representative: Allen, Derek
The Plessey Company plc Intellectual
Property Department Vicarage Lane
Ilford Essex, IG1 4AQ(GB)

(54) Multichannel radio communication system.

(57) A multichannel radio communication system for a cordless telephone communication, comprising a plurality of handsets and a plurality of radio units at least equal in number to the required channels, each base unit including an antenna, a signal transmitter, a signal receiver and an audio signal processor. The signal transmitter, the signal receiver and the audio signal processor of each radio unit are accommodated within a space defined by their associated antenna which is formed in two main parts, being spaced apart to define a dipole.

Fig. 1.

## MULTICHANNEL RADIO COMMUNICATION SYSTEM

The present invention relates to a multichannel radio communication system.

The system finds application in the area of cordless telephones, where a number of different handsets communicate with respective radio modules located at a common control unit.

As soon as there is a requirement for more than one radio link to be combined within a common control unit (forming a common antenna feed), several technical difficulties have to be overcome. These include antenna combining systems, receiver desensitisation, and transmitter intermodulation.

### ANTENNA COMBINING SYSTEMS

With a multiplicity of radio units (transmitters and receivers) to be combined within a common control unit, there is a requirement to produce a common antenna feed by combining the outputs of the radio systems into a common feed by combining the outputs of the radio units. Low loss techniques which are currently used for combining radio systems into a common feed are essentially narrowband techniques and are not applicable to multichannel wideband systems such as cordless telephones.

However, wideband combining techniques are possible at these operating frequencies but incure losses (in multiples of 3 dB's) which degrade the overall system performance with respect to the system receive sensitivity and transmit power, which require the use of 'Linear' low noise preamplifiers and power amplifiers.

### RECEIVER DESENSITISATION

Receiver desensitisation is caused by colocated transmitters blocking receiver inputs and causing a reduction in wanted signal to noise ratio.

### TRANSMITTER INTERMODULATION

Intermodulation products are generated by a multiplicity of transmitter outputs being combined, which in turn feed back into the output stages of each power amplifier and the 'non linearity' of the output stages cause inband and out of band intermodulation products to be generated (dependant on frequency spacings of each transmitter), which cause free channels to look as if they are in use.

Current cordless telephone systems operate with radio links below 50 MHz between the base unit and handset and use retractable antenna, however, the system according to the present invention operates on frequencies in the 864 - 868 MHz region.

Advantages of the system are that multichannel operation is possible, each handset can have a built-in antenna instead of a retractable antenna and the common control unit can have a number of stacked antennas mounted on it.

An aim of the present invention is to provide a multichannel radio communication system having the above advantages and which does not suffer from the limitations of known systems.

According to the present invention there is provided a multichannel radio communication system for a cordless telephone communication, comprising a plurality of handsets and a plurality of radio units at least equal in number to the required channels, each radio unit including an antenna, a signal transmitter, a signal receiver and an audio signal processor.

According to an aspect of the present invention the signal transmitter, the signal receiver and the audio signal processor of each radio unit are accommodated within a space defined by their associated antenna which is formed in two main parts, being spaced apart to define a dipole.

According to another aspect of the present invention, a plurality of antennas are vertically stacked with a common control unit mounted beneath the plurality of stacked antennas.

According to a further aspect of the present invention each handset is provided with an antenna which is located within the handset.

An embodiment of the present invention will now be described with reference to the accompanying drawings wherein:-

Figure 1 shows a block diagram of a central control unit for a number of radio units,

Figure 2 shows the layout of the common control unit and antenna assembly,

Figure 3 and Figure 3a show views of an antenna for a base unit, or a handset.

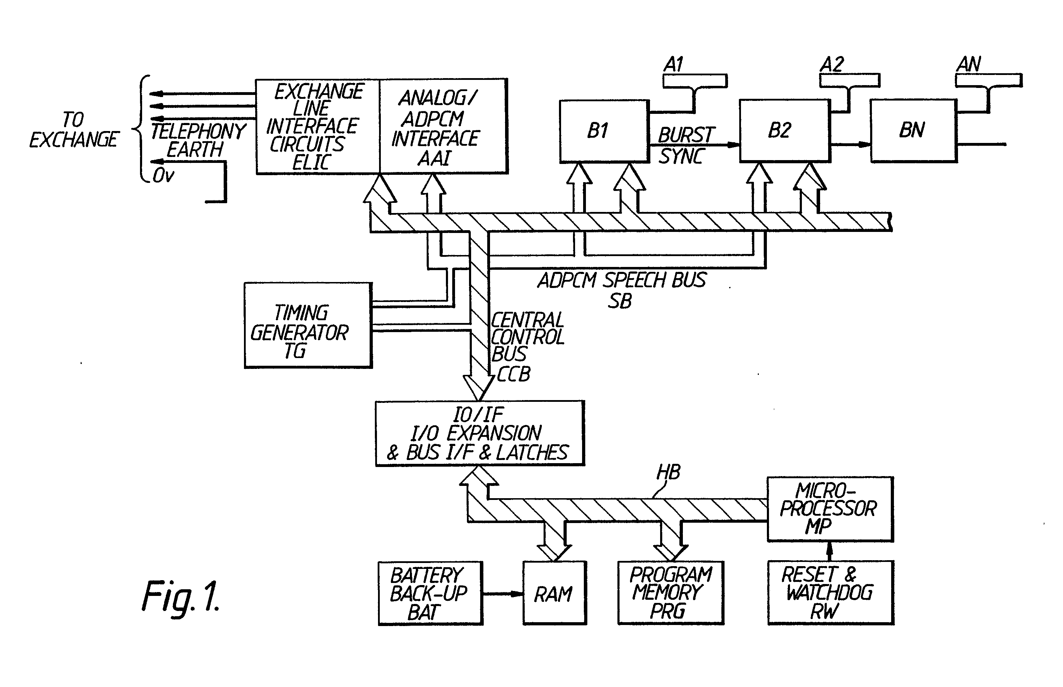

Referring to Figure 1, a number of radio units B1, B2, BN are shown with their associated antenna A1, A2, AN. The units are connected to a central control bus CCB and to an ADPCM (adaptive delta pulse code modulation) speech bus SB. The central control bus CCB also has connected to it exchange line interface circuits ELIC, a timing generator TG and input and output expansion and bus interface and latch circuits IO/IF. The speech bus SB is connected to the timing generator TG and an analog/ADPCM interface circuit AAI. Control is provided by a microprocessor MP which is connected to the circuit IO/IF by a highway bus HB. A program memory PRG and random access memory RM are also connected to the bus HB. The microprocessor MP is provided with a reset and watchdog facility RW, and the random access memory RAM is provided with a back-up battery BAT to maintain the contents of the memory in the event of power failure.

The system is mains powered and uses remotely located cordless handsets.

Call set-up and exchange-line seizure are achieved by appropriate key presses at the key unit e.g. 2X, 3X etc. for internal and 1, 2 or 3 for external calling. A sounder at the handset is provided for audible call arrival indication.

Conversions between analogue and ADPCM speech signals are performed in the cordless handsets and in the exchange-line circuits.

The common control unit is microprocessor controlled and distributed microprocessors control the radio units of the RF links operating in the frequency range 864-868 MHz. Internal and external routing of speech and control signals within the common control unit is performed on TDM (time division multiplex) buses carrying digitally encoded signals. Speech and control signals passing over the RF links are also encoded in digital form.

Exchange line monitoring is achieved by high impedance (> 10 M ohms) detectors.

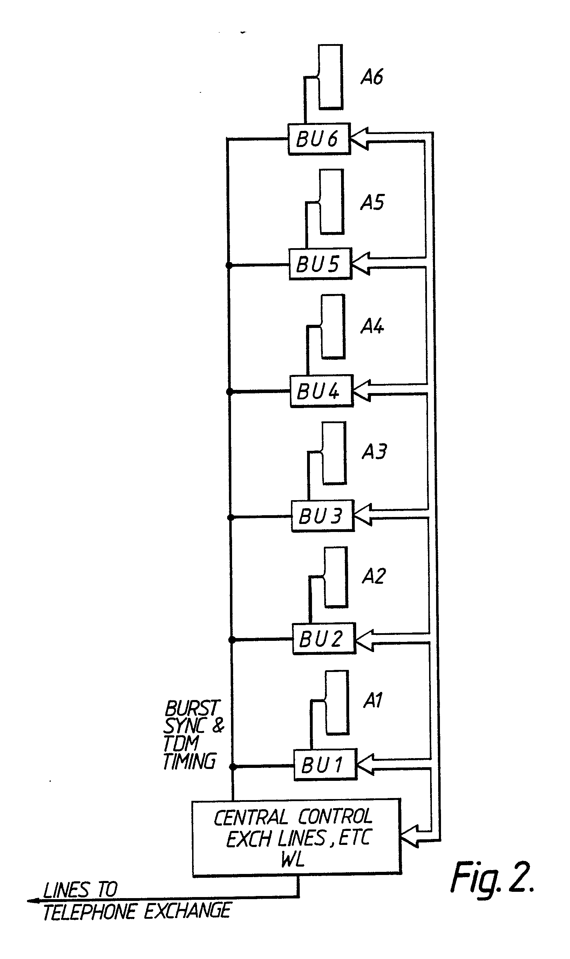

Figure 2 shows a schematic representation of a layout for the common control unit and antenna assembly. In this layout the antennas of up to six RF links are vertically stacked A1-A6. Each radio unit BU1-BU6 is mounted within its associated antenna, and the antennas are vertically stacked. The rest of the equipment, e.g. central processor, exchange-line circuits, etc. which is not closely associated with the RF circuitry, is located at the foot of the antenna array in the common control unit WL.

The common control unit WL generates burst sync and TDM timing signals to each of the radio units BU1-BU6, and also interfaces with the telephone lines leading to the exchange.

All transmitters and receivers are synchronised within a common control unit, and all additional radio links added to the base unit become slaves with the first base unit maintaining system control. All radio units and antennas listen together and transmit together in time division duplex mode, i.e. burst mode, and the transmission is therefore in digital form.

In respect of transmitter intermodulation the maximum signal from each transmitter which could be fed back into a colocated transmitter is typically +5dBm. By specifying the power amplifier output devices with a +35 dBm third order intercept would result in the generation of intermodulation products at a level of -63 dBm, which will require at least another 35 dB of attenuation to achieve an intermodulation product level below the required 'free channel aquisition threshold'.

However, by insertion of an isolator (of circulator) before the input of each stage giving approximately 35 dB of isolation at 864 MHz, will cause a reduction in the intermodulation specification of the output devices to OdB, which is the level required by the handset for a maximum input signal of -30 dBm.

By careful specification of the antenna configuration and the amount of isolation between the transmitter output stages a uniform and compact configuration of nested radio units forming 'radiating panels', can be configured to allow modular extension of base units.

An antenna design for the handset and base unit is required which will allow the construction of a radio module, including the microprocessor and audio processing etc, within a dipole. By using this basic design, it is possible to extend the method of construction to allow cascading or radio units, which will produce an extremely wide bandwidth dipole, containing 'N' radio units.

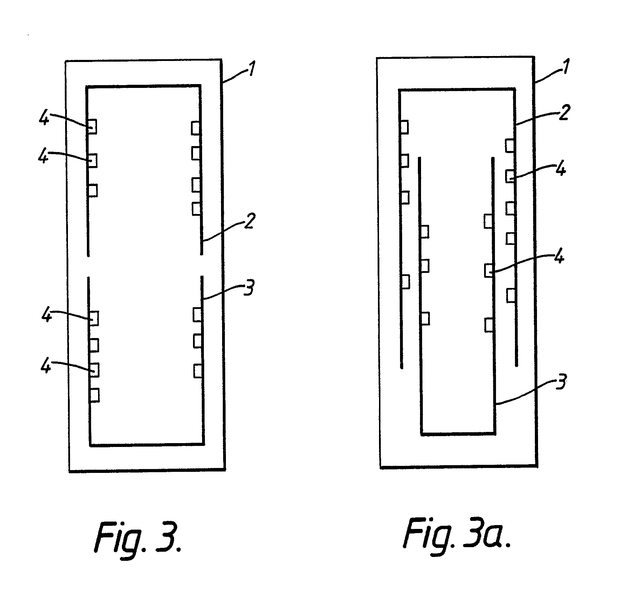

Referring to Figure 3, an antenna suitable for a base and or a handset 1 is shown. The antenna is a dipole formed by two main parts 2, 3. A first part 2 is spaced apart from a second part 3. The dipole antenna 2, 3 is formed by electrical circuit boards defining an area in which the electrical circuits such as the signal transmitter, signal receiver and audio signal processor are located, and shown as components 4. The antenna acts as screening for the electrical circuit in their vicinity to prevent RF interference.

In an alternative form, the part 3 may be constructed so that it is narrower than part 2, enabling the part 3 to be located within the part 2 but spaced from it as shown in Figure 3a.

The above description is not intended to limit the scope of the present invention. Alternative ways of implementing and extending the invention will readily be appreciated by those skilled in the art.

## Claims

1. A multichannel radio communication system for a cordless telephone communication, comprising a plurality of handsets and a plurality of radio units at least equal in number to the required channels, each radio unit including an antenna, a signal transmitter, a signal receiver and an audio signal processor.

2. A system as claimed in claim 1 wherein the signal transmitter, the signal receiver and the audio signal processor of each radio unit are accommodated within a space defined by their associated antenna which is formed in two main parts, being spaced apart to define a dipole.

3. A system as claimed in claim 2 wherein the associated antenna is formed in two main parts, one part being enclosed within and spaced apart from the other part to define a dipole.

4. A system as claimed in claim 2 wherein a plurality of antennas are vertically stacked with a common control unit mounted beneath the plurality of stacked antennas.

5. A system as claimed in claim 1, 2, 3 or 4 wherein each handset is provided with a dipole antenna which is located within the handset.

6. A system as claimed in claim 5 wherein the signal transmitters and receivers are synchronised with the common control unit.

7. A system as claimed in claim 6 wherein the channels operate at 864-868 MHz.

Fig.1.

EP 0 341 881 A2

Fig. 2.

Fig. 3.

Fig. 3a.